# EUROPEAN PATENT SPECIFICATION

(11) **EP 0 244 256 B1**
(45) Date of publication and mention of the grant of the patent: **16.06.1993**
(21) Application number: 87303903.6
(22) Date of filing: 30.04.1987
(51) Int. Cl.: B29C 51/02, B29C 49/00

(54) **Method for producing tubular plastic containers**
Verfahren zur Herstellung von rohrförmigen Kunststoffbehältern
Procédé pour la production de récipients tubulaires en matière plastique

(30) Priority: 02.05.1986 US 859475
(43) Date of publication of application: 04.11.1987
(73) Proprietor: COURTAULDS PACKAGING INC., Wheeling West Virginia 26003 (US)
(72) Inventor: Holoubek, George H., Muscatine Iowa 52761 (US); Rhoades, John J., Muscatine Iowa 52761 (US); Whitaker, George P., Triadelphia West Virginia 26059 (US)
(74) Representative: Frankland, Nigel Howard

(56) References cited:
- FR-A- 1 523 482
- FR-A- 2 226 325
- US-A- 2 678 471
- US-A- 3 047 910
- US-A- 3 354 603
- US-A- 3 603 217

## Description

The present invention relates to a method for producing tubular plastic containers and, more specifically, to a method for producing tubular plastic containers from a tubular sleeve, having an open neck at one end and an open end at the other end, by closing the open end thereof with an integral sealed bottom wall.

Thermoplastic tubular containers, especially collapsible or squeezable containers, have continued to take over an increasing share of the container market from metallic tubes. Such thermoplastic tubular containers are extensively used in packaging of cosmetics, medicinal preparations, shampoos and other products. With the increased development of multilayer or laminated tubes having oxygen barrier properties, that resist oxygen, or other gas permeation, further increases in packaging of pharmaceutical products and or foodstuffs in thermoplastic tubes are occurring. In addition to the packaging of products for use by consumers in a collapsible tube form, the use of collapsible thermoplastic containers or bag-like receptacles are also used in aerosol can applications where the product to be sprayed from the aerosol can is protected in a thermoplastic container separate from a pressurized fluid which is, in turn, contained within an outer shell, such as a metallic pressure resistant can.

One process for the formation of thermoplastic tubular containers is described in U.S.A. 3,047,910. As described therein, thermoplastic tubular containers are fabricated by placing a thermoplastic tubular member, or hollow tube, into a forming collar and forcing a cut, molten disc into an open end of the tubular member. The latent heat of the molten disc is sufficient to weld the peripheral edge of the disc to the inner wall of the tubular member, and thus form an end closure or head for the tubular container. As described, pressure is exerted through the interior of the tubular container to the sealed end closure to shape the latter to a desired contour. The preferred means for applying pressure to the sealed end closure is through the use of a mandrel that is inserted through the open end of the tubular member. It is also suggested that air under suitable pressure or a reciprocable flat end mandrel may be admitted interiorly of the tubing to assure that the flat end-closure is not distorted upon cooling and remains desirably flat.

A further process for forming collapsible thermoplastic tubular containers is described in U.S.A. 3,962,006. In that process, a laminated film is used to form a thermoplastic sleeve having an impermeable layer, and a molten disc also having an impermeable layer is welded to the interior wall of the laminated thermoplastic sleeve. A pressing operation is used to form a head member on the tube, the pressing operation using a female mould and a core which interiorly supports the laminated thermoplastic sleeve.

These processes relate to the formation of headed sections on tubular sleeves and are usable only when a fully open end of the container is provided opposite the headed section to be formed, to permit the insertion of a headed core or internal mandrel into the interior of the tubular sleeve to press the headed section into conformity with a female mould. When the other end wall or bottom of the tubular container is subsequently formed, such is normally formed merely by heat sealing transversely across the bottom to close the same. In the formation of such a transverse heat sealed bottom, however, flared or webbed portions result at the opposite ends of the transverse seal which can be detrimental in certain applications, and also results in a container that cannot be supported freely by the bottom wall on a flat surface.

In the formation of collapsible thermoplastic tubes in the nature of a bottle or bag for use in aerosol containers, the flared portion on the transversely sealed bottom wall is not desirable due to the space limits of the aerosol can in which the tube is to be used.

It is an object of the present invention to provide a process for sealing integrally a bottom wall to a thermoplastic tubular container having an open neck at the top end thereof.

According to this invention there is provided a method for producing a tubular thermoplastic container having an open neck at one end and a sealed bottom wall at the other end comprising forming a tubular wall section of predetermined inner diameter having an open neck section at one end thereof which neck section has an inner diameter less than the inner diameter of the tubular wall section and creating a closure at the other end thereof wherein said closure is formed by locating a thermoplastic disc at the said other end, so that said thermoplastic disc is welded at its peripheral edge to the inner circumferential wall at said other end of the tubular wall section to close said other end, said thermoplastic disc being in a mouldable state when located at said other end; placing said closed end, and at least a major portion of the tubular wall section, into a mould sleeve having a closed bottom cavity; and forming said thermoplastic disc, while the same is still in a mouldable state, to cause the disc to conform in shape to said closed bottom cavity to form said sealed bottom wall.

In one embodiment said forming is effected by applying a vacuum to the exterior surface of said thermoplastic disc.

Preferably while applying said vacuum, forming is also effected by applying a fluid pressure, through said open neck into the confines of said tubular wall section and closed other end.

Alternatively said forming is effected by applying a fluid pressure, through said open neck into the confines of said tubular wall section and closed other end.

Advantageously the closed bottom cavity of said mould sleeve is concave in shape and a bottom wall is formed on said container having a convex shape.

In one embodiment said tubular wall section has a plurality of longitudinal grooves spaced about the circumference thereof.

Conveniently said closed bottom cavity of said mould sleeve has a circular groove about the periphery of the inner surface thereof, and the bottom end of said tubular wall section and the peripheral edge of said disc are situated adjacently above said groove, whereby a bottom wall is formed on said container having a thickened, downwardly extending, support rim thereabout.

Said tubular wall section may comprise a laminate of a plurality of layers of material and said thermoplastic disc also comprises a laminate of a plurality of layers of material. At least one of said layers may be a barrier layer, such as a layer comprised of an oxygen impermeable material.

In a preferred embodiment of the invention a thermoplastic container having a tubular wall section, an open-neck top, and an integral, sealed bottom wall is formed by providing an open-neck top section on a tubular wall section and sealing the bottom by insertion therein of a molten thermoplastic disc such that the latent heat of the disc seals the disc to the inner circumferential wall of the tubular wall section, and, while the disc is still in a mouldable state, forming the disc to the shape of a closed bottom mould cavity by applying a vacuum to the exterior surface of the disc or applying a fluid pressure to the interior of the tubular wall section through the open neck, while blocking the open-neck region, or applying both said vacuum and said fluid pressure, to mould the disc to a desired shape in a mould cavity. The tubular wall section is maintained in a supporting sleeve which mates with the closed bottom mould. Fluid pressure is applied to the interior of the tubular member against the bottom wall by means of a conduit, or other means, through the open neck thereof, while the closed bottom mould has means therein for applying a vacuum to the exterior surface of the disc.

The integral, sealed bottom wall may be formed as a flat wall, or concave shape, or is a convex or dome-shaped wall extending towards the interior of the finished container. The container, including the integral, sealed bottom wall, may be of a single thermoplastic material or formed from a laminated or layered material which includes a gas impermeable layer or barrier. The tubular wall section may be cylindrical in shape or have longitudinal ribs extending therealong, or be of another profile.

The invention will now be described by way of example with reference to the accompanying drawings in which:
Figure 1 is a cross-sectional view of a thermoplastic tubular wall section having an open neck and open bottom for use in forming thermoplastic containers according to the present method;
Figure 2 is a cross-sectional view of the thermoplastic tubular wall section of Figure 1 upon closing of the bottom with a molten disc of thermoplastic material welded to the inner periphery thereof;
Figure 3 is a cross-sectional view of the closed bottom wall and thermoplastic wall section of Figure 2 upon insertion into a mould sleeve for forming of the closed bottom wall thereof;
Figure 4 is a cross-sectional view similar to Figure 3 illustrating the application of vacuum to the exterior surface of the bottom wall disc and application of a fluid pressure to the inner confines of the tubular wall section and closed end to form the bottom wall to a desired shape;
Figure 5 is a cross-sectional view of a thermoplastic tubular container formed according to one embodiment of the present method;
Figure 6 is a perspective view of another embodiment of a thermoplastic tubular container produced according to the present method;
Figure 7 is a cross-sectional view taken along lines VII-VII of Figure 6;
Figure 8 is a cross-sectional view of another embodiment of the present invention illustrating a closed bottom wall and thermoplastic wall section upon insertion into a mould sleeve for forming a closed bottom wall having a peripheral support rim thereabout;
Figure 9 is a cross-sectional view similar to Figure 8 Illustrating the application of a vacuum to the exterior surface of the bottom wall disc and application of a fluid pressure to the inner confines of the tubular wall section and closed end to form the bottom wall with a peripheral support rim;
Figure 10 is a cross-sectional view of a thermoplastic tubular container formed according to another embodiment of the present method;
Figure 11 is a cross-sectional view of a laminated structure thermoplastic tubular container produced according to the present invention comprising a three layer laminated structure; and
Figure 12 is a cross-sectional view of a laminated structure thermoplastic tubular container produced according to the present invention comprising a five layer laminated structure.

The present method provides a means for forming thermoplastic containers having an open neck and a tubular wall section and an integral sealed bottom wall of a desired configuration. The method is applicable to thermoplastic containers of a single thermoplastic resin or to thermoplastic containers formed from laminated plastic materials containing a barrier layer, such as an oxygen permeable layer. A specific application of the present method is to the formation of an integral, sealed bottom wall on a tubular member having an open neck at one end and an open end at the other end thereof on a tubular wall section formed by extruding a cylindrical wall section followed by formation of the open neck thereon.

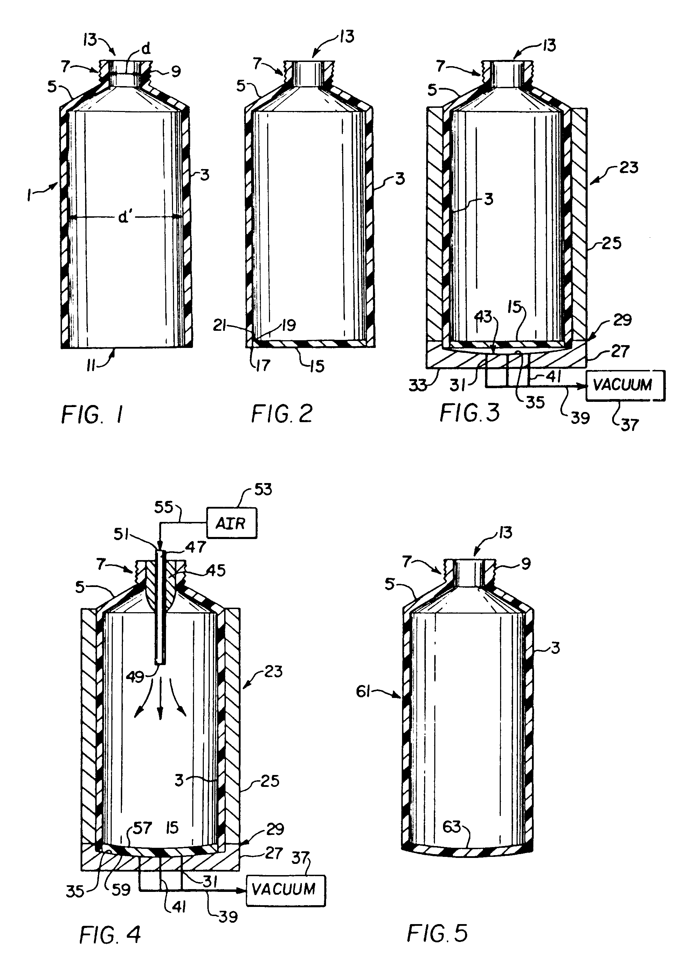

Referring now to Figures 1 to 5, the formation of a tubular thermoplastic container or bottle from a thermoplastic resin is illustrated, the tubular thermoplastic container having a slightly convex bottom wall. As illustrated in Figure 1, a tubular member 1 has a tubular wall section 3, with an inwardly directed upper wall portion 5 which terminates as an open neck section 7. The open neck section 7 has threads 9 on the outer surface thereof for use in applying a threaded cap (not shown) for subsequent sealing of the container after a desired product has been placed therein. The tubular wall section 3 is open at its bottom 11, while the open-neck portion 7 has an inner diameter d less than the inner diameter d' of the tubular wall section 3. The tubular wall section 3, with its open-neck 7 and open bottom 11 may be formed by any known process, and may be of any desired shape, but is preferably formed by extruding a hollow cylinder of thermoplastic material and then forming the open neck section by a process similar to that described in U.S.A. 3,047,910, wherein a neck portion is sealed and pressed into shape using a molten disc of thermoplastic material which is welded with the hollow cylinder. An opening is then punched through the pressed form, to provide an orifice, such as 13, for the subsequent dispensing of a product from the tubular container.

A molten thermoplastic disc 15 of diameter d', is then applied within the confines of the open end 11 of the tubular wall section and sealed to the inner circumferential wall thereof, as illustrated in Figure 2. The thermoplastic disc is sealed to the inner circumferential wall of the tubular wall section as at 17, preferably by forcing the cut, molten disc into the open end 11 of the tubular wall section 3 and using latent heat of the molten plastic disc 15 to weld the peripheral edge 19 of the disc to the inner circumferential wall 21 of the tubular wall section.

While the plastic disc 15 is still in a mouldable state, but after formation of the seal 17, the tubular wall section 3 having the open neck section 7 at one end thereof, arid the plastic disc 15 at the other end thereof, is placed into a mould sleeve as illustrated in Figure 3. The mould sleeve 23, as illustrated, has a sleeve portion 25 and a closed bottom mould cavity 27, the sleeve portion and bottom cavity mating together, as at mating line 29. The closed bottom cavity 27 may have a plurality of small diameter apertures 31 therethrough from the outer surface 33 to the inner surface 35 thereof for use in applying a vacuum therethrough. The number and diameter of the apertures should be sufficient to exhaust air trapped between the disc and the inner surface 35 of the bottom mould cavity but insufficient to cause formation of objectionable bosses on the finished tube bottom. A source of vacuum 37, such as a vacuum pump, communicates with the apertures 31 by means of line 39 and branch lines 41. The tubular wall section 3 is inserted within the mould sleeve 23 with the tubular wall section 3 in close proximity to the surrounding mould sleeve portion 25 and the plastic disc, in a mouldable state, adjacent the closed bottom cavity 27. In Figure 3, the closed bottom cavity has a slight concave inner surface 43 so as to form a slightly convex bottom wall on the tube.

After placement of the tubular wall section 3 into the mould sleeve 23, with the closed bottom containing the disc 15, and at least a major portion and preferably all of the tubular wall section 3 between the bottom wall and the inwardly directed upper wall portion 5 contained with the mould sleeve, a fluid pressure is applied to the interior confines of the tubular wall section and closed other end, through the open neck section 7, as illustrated in Figure 4. The fluid pressure is applied through the open neck 7 such as by inserting a plug 45 into the open neck, the plug having a fluid conduit 47 therethrough, with one end 49 of the conduit 47 terminating within the confines of the tubular wall section 3 and disc of the closed bottom 15, while the other end 51 thereof is connected to a source of fluid pressure 53, such as a pressurised air source, through line 55.

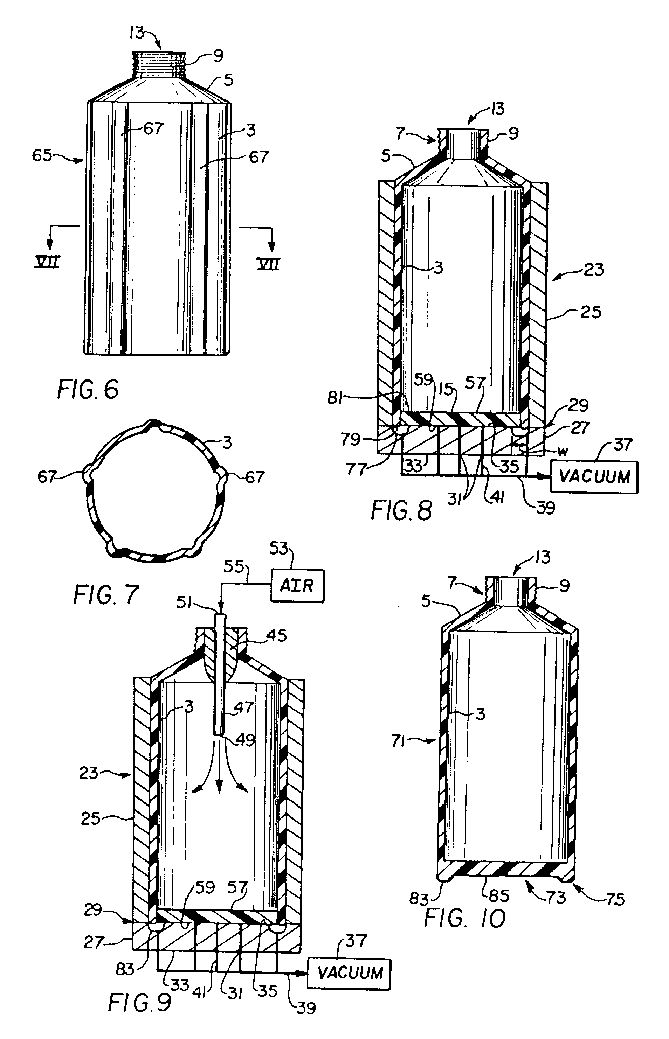

The disc, while in a mouldable state, may be shaped to the confines of the closed bottom mould by the use of the fluid pressure, by the use of the vacuum, or by the use of both. As illustrated in Figure 4, both fluid pressure and vacuum are used. While a vacuum is applied to the exterior surface 59 of the plastic disc by means of vacuum source 37, lines 39 and 41 and apertures 31, the pressurised air is applied to the inner confines of the tubular wall section 3 and bottom wall 15, as indicated by the arrows in Figure 4, against the interior surface 57 of the plastic disc. The plastic disc, being in its mouldable state, will be moulded to the shape of the inner surface 35 of the bottom mould cavity 27. After formation of the closed bottom, the bottle or tube is removed from the sleeve mould 23. Figure 5 illustrates the resultant formed tubular container 61. The closed bottom 63 thus formed will normally be of a thicker cross-section than the tubular wall section 3 and provides strength and stability for the tubular container.

The application of vacuum to the exterior surface of the plastic disc or the application of fluid pressure to the interior confines of the tubular wall section and closed bottom, or both, are effected while the thermoplastic of the disc is in a mouldable state. The thermoplastic of the disc is no longer in a purely molten state or above its melting point after the latent heat thereof has welded the disc to the tubular wall, but must still be above the glass transition temperature of the thermoplastic so that the same is soft and flexible and mouldable to the desired shape.

As illustrated in Figures 6 and 7, a collapsible thermoplastic container 65 may be prepared according to the present process wherein the tubular wall section 3 has a plurality of longitudinal grooves or channels 67 spaced about the circumference of the tubular wall section, by using a tubular wall section having such grooves therein.

A preferred form of thermoplastic container 71 that can be produced according to the present process is illustrated in Figures 8 to 10 wherein the bottom wall 73 is concave in shape with a thickened wall portion 75 about the periphery thereof. Referring now to Figure 8, a tubular wall section 3, with an inwardly directed upper wall portion 5, a threaded open neck 7, having threads 9 and orifice 13, and with a mouldable disc 15 in the bottom, is inserted into a mould sleeve 23. The mould sleeve 23 comprises a sleeve portion 25 and closed bottom cavity 27, as in the illustration of Figure 3, with a parting line 29. The vacuum source 37 is provided in conjunction with lines 39 to 41 and apertures 31, which extend from the exterior mould surface 33 to the interior mould surface 35. In this embodiment, however, a circular groove 77 is provided in the interior surface 35, about the periphery of the inner surface, at the location of the seam betwen tubular wall section 3 and bottom wall 15. The groove is of a width w sufficient to accept the bottom wall 79 of the tubular wall section 3 as well as peripheral portion 81 of the disc 15. Upon application of a vacuum to the outer surface 59 of the disc, which is in a mouldable state, and to the bottom wall 79 of the tubular wall section 3, the bottom wall is drawn towards the groove, as is the peripheral portion 81 of the disc 15. Also, with application of a fluid pressure to the confines of the tubular wall section 3 and closed bottom, against the inner surface 57 of the disc, when fluid pressure is applied, a composite peripheral wall section or rim 83 (Figure 9) is formed as a thickened, downwardly extending, support rim, about the periphery of the bottom wall, and a recessed or concave tube bottom 85 results, which rim provides a strong support for the tubular container when it is placed on a flat surface.

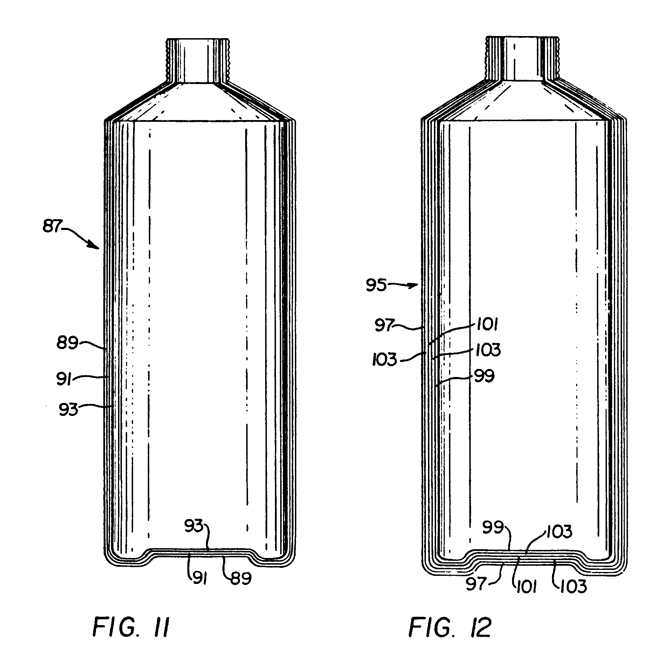

The present process is also applicable to formation of tubular thermoplastic containers of laminated or layered thermoplastic materials, as illustrated in Figures 11 and 12. Such laminates comprise layers of a thermoplastic material and a barrier layer such as aluminium foil, or the like, or layers of varient plastic materials which may be co-extruded in layers to form a multi-layer thermoplastic material. In the formation of such tubular thermoplastic containers, the tubular wall section and plastic disc are formed from laminated plastic material and then sealed together and moulded as would be a thermoplastic tubular container of a single thermoplastic material. The container 87 illustrated in Figure 11 is formed from a three layer tubular wall section and a three layer molten disc. Such a three layer composite would comprise an outer layer 89, an intermediate layer 91 and an inner layer 93, where the inner and outer layers are formed of a thermoplastic material different to the material of the intermediate layer. For example, the outer layer 89 and inner layer 93 could be polyethylene, or other thermoplastic, while the intermediate layer 91 might be an oxygen impermeable layer, which may be a polyamide such as nylon, or ethylene polyvinyl alcohol, a polyvinylidene chloride, or the like. Figure 12 illustrates a container 95 having a similar laminated structure wherein a five layer composite comprises an outer layer 97, inner layer 99, intermediate impermeable layer 101, and two layers of an adhesive 103, one of the layers of adhesive 103 situated between the intermediate layer 101 and each of the outer layer 97 and the inner layer 99. Such a five layered construction can, for example, comprise a thermoplastic such as polyethylene, polypropylene, a polyester such as polyethylene terephthalate, or the like, as the outer layer 97 and the inner layer 99, an intermediate layer 101 of an oxygen impermeable material such as nylon, ethylene polyvinyl alcohol, polyvinylidene chloride, or the like, and adhesive layers 103 to bond the intermediate layer to each of the inner and outer layers.

The present invention is thus adaptable to the formation of thermoplastic tubular containers with an open neck portion, tubular wall section and closed bottom of a variety of thermoplastic materials, or laminated material. Such thermoplastic tubular containers, formed according to the present process will have a tubular wall section of between about 0.010 to 0.040 inch (0.254 mm to 1.016 mm) in thickness, and a bottom wall of between about 0.010 to 0.080 inch (0.254 mm to 2.032 mm) in thickness. Pressure applied will range between about 5 to 140 pounds per square inch gauge, (34.4 to 965.1 Kpa). Polyethylene tubular containers have been formed having a tubular wall section of between about 0.016 and 0.020 inch in thickness (0.40 mm to 0.50 mm) having a bottom wall of about 0.040 to 0.060 thickness, using a fluid pressure applied of less than about 20 pounds per square inch gauge (138 Kpa) and a vacuum applied of about 15 to 20 inches (50 to 68 Kpa). Since the tubular wall section may be an extruded tubular section, the wall thickness is very uniform and variations in wall thickness are within a value of about ± 10 percent of the wall thickness. The bottom wall may be the same thickness or may be a thickness of two to three times the thickness of the container wall but readily formed into a desirable shape or contour.

## Claims

1. A method for producing a tubular thermoplastic container having an open neck at one end and a sealed bottom wall at the other end comprising forming a tubular wall section(3) of predetermined inner diameter having an open neck section at one end thereof which neck section(7) has an inner diameter less than the inner diameter of the tubular wall section and creating a closure at the other end thereof wherein said closure is formed by locating a thermoplastic disc(15) at the said other end, so that said thermoplastic disc is welded at its peripheral edge to the inner circumferential wall at said other end of the tubular wall section to close said other end, said thermoplastic disc being in a mouldable state when located at said other end; placing said closed end, and at least a major portion of the tubular wall section, into a mould sleeve(23) having a closed bottom cavity(27); and forming said thermoplastic disc(15), while the same is still in a mouldable state, to cause the disc to conform in shape to said closed bottom cavity to form said sealed bottom wall.

2. A method as defined in Claim 1 wherein said forming is effected by applying a vacuum to the exterior surface of said thermoplastic disc(15).

3. A method as defined in Claim 2 wherein, while applying said vacuum, forming is also effected by applying a fluid pressure, through said open neck(7) into the confines of said tubular wall section and closed other end.

4. A method as defined in Claim 1 wherein said forming is effected by applying a fluid pressure, through said open neck into the confines of said tubular wall section and closed other end.

5. A method as defined in any one of the preceding Claims wherein the closed bottom cavity(27) of said mould sleeve used in the method is concave(35) in shape and a bottom wall is formed on said container having a convex shape.

6. A method as defined in any one of the preceding Claims wherein said closed bottom cavity(27) of said mould sleeve(23) used in the method has a circular groove (77) about the periphery of the inner surface thereof, and wherein the bottom end of said tubular wall section and the peripheral edge of said disc are situated adjacently above said groove, whereby a bottom wall is formed on said container having a thickened, downwardly extending, support rim thereabout.

7. A method as defined in any one of the preceding Claims wherein said tubular wall section is formed having a plurality of longitudinal grooves spaced about the circumference thereof.

8. A method as defined in any one of the preceding Claims wherein said tubular wall section is formed from a laminate of a plurality of layers of material(97-101) and said thermoplastic disc also comprises a laminate of a plurality of layers of material.

9. A method as defined in Claim 8 wherein at least one(91-100) of said layers is a barrier layer.

10. The method as defined in Claim 9 wherein said barrier layer(91-101) is comprised of an oxygen impermeable material.

## Patentansprüche

1. Verfahren zur Herstellung eines rohrförmigen, thermoplastischen Behälters mit einem offenen Hals an einem Ende und einer abgedichteten Unterwand am anderen Ende, umfassend: Ausbilden eines rohrförmigen Wandabschnitts (3) von vorbestimmtem inneren Durchmesser, der einen offenen Halsabschnitt an einem Ende davon hat, welcher Halsabschnitt (7) einen inneren Durchmesser hat, der geringer als der innere Durchmesser des rohrförmigen Wandabschnitts ist, und Schaffen eines Abschlusses am anderen Ende davon, wobei der besagte Abschluß durch Anordnen einer thermoplastischen Scheibe (15) an dem besagten anderen Ende gebildet wird, so daß die besagte thermoplastische Scheibe an ihrem Umfangsrand an die innere Umfangswand an dem besagten anderen Ende des rohrförmigen Wandabschnitts geschweißt wird, um das besagte andere Ende zu verschließen, wobei die besagte thermoplastische Scheibe in einem verformbaren Zustand ist, wenn sie an dem besagten anderen Ende angeordnet wird; Einsetzen des besagten geschlossenen Endes, und wenigstens eines größeren Teils des rohrförmigen Wandabschnitts, in eine Formtrommel (23) mit einem geschlossenen Bodenraum (27); und Verformen der besagten thermoplastischen Scheibe (15), während sich diese noch in einen verformbaren Zustand befindet, um die Scheibe in eine mit dem besagten geschlossenen Bodenraum übereinstimmende Form zu bringen, um die besagte, abgedichtete Bodenwand auszubilden.

2. Verfahren nach Anspruch 1, dadurch gekennzeichnet, daß das besagte Verformen durch Anwendung eines Vakuums auf die Außenfläche der besagten thermoplastischen Scheibe (15) ausgeführt wird.

3. Verfahren nach Anspruch 2, dadurch gekennzeichnet, daß das Verformen, während das besagte Vakuum angewendet wird, auch dadurch ausgeführt wird, daß ein Fluiddruck durch den besagten offenen Hals (7) auf die Ränder des besagten rohrförmigen Wandabschnitts und des geschlossenen anderen Endes aufgebracht wird.

4. Verfahren nach Anspruch 1, dadurch gekennzeichnet, daß das besagte Verformen durch Aufbringen eines Fluiddrucks durch den besagten offenen Hals auf die Ränder des besagten rohrförmigen Wandabschnitts und des geschlossenen anderen Endes ausgeführt wird.

5. Verfahren nach einem der vorangehenden Ansprüche, dadurch gekennzeichnet, daß der geschlossene Bodenraum (27) der besagten, in dem Verfahren verwendeten Formtrommel von konkaver Form (35) ist, und daß eine Bodenwand von konvexer Form an dem besagten Behälter gebildet wird.

6. Verfahren nach einem der vorangehenden Ansprüche, dadurch gekennzeichnet, daß der besagte geschlossene Bodenraum (27) der besagten, in dem Verfahren verwendeten Formtrommel (23) eine kreisförmige Nut (77) auf dem Umfang der Innenfläche davon hat, und daß das untere Ende des besagten rohrförmigen Wandabschnitts und der Umfangsrand der besagten Scheibe unmittelbar oberhalb der besagten Nut liegen, wodurch an dem besagten Behälter eine Bodenwand mit einem verdickten, sich nach unten erstreckenden Auflagerand dort herum gebildet wird.

7. Verfahren nach einem der vorangehenden Ansprüche, dadurch gekennzeichnet, daR der besagte rohrförmige Wandabschnitt mit einer Vielzahl von Längsnuten gebildet wird, die auf dem Umfang davon mit Abstand angeordnet sind.

8. Verfahren nach einem der vorangehenden Ansprüche, dadurch gekennzeichnet, daß der besagte rohrförmige Wandabschnitt aus einem Laminat einer Vielzahl von Materialschichten (97-101) gebildet wird und die besagte thermoplastische Scheibe ebenfalls ein Laminat aus einer Vielzahl von Materialschichten umfaßt.

9. Verfahren nach Anspruch 8, dadurch gekennzeichnet, daß wenigstens eine (91-100) der besagten Schichten eine Sperrschicht ist.

10. Verfahren nach Anspruch 9, dadurch gekennzeichnet, daß die besagte Sperrschicht (91-101) aus einem sauerstoffundurchlässigen Material besteht.

## Revendications

1. Procédé de production d'un récipient thermoplastique tubulaire ayant un col ouvert à une extrémité et une paroi de fond scellée à l'autre extrémité, comprenant les opérations consistant à former une partie paroi tubulaire (3) de diamètre interne prédéterminé ayant une partie col ouvert à une de ses extrémités, laquelle partie col (7) a un diamètre interne inférieur au diamètre interne de la partie paroi tubulaire, et à créer une fermeture à son autre extrémité, ladite fermeture étant formée par mise en place d'un disque thermoplastique (15) à ladite autre extrémité, de sorte que ledit disque thermoplastique est soudé sur son arête périphérique à la paroi circonférentielle interne à ladite autre extrémité de la partie paroi tubulaire pour fermer ladite autre extrémité, ledit disque thermoplastique étant à un état déformable lorsqu'il est mis en place à l'autre extrémité ; à placer ladite extrémité fermée et au moins la majeure partie de la partie paroi tubulaire dans un manchon de moulage (23) ayant une cavité inférieure fermée (27) ; et à déformer plastiquement ledit disque thermoplastique (15), alors que ce dernier est toujours à un état déformable, pour amener le disque à épouser la forme de ladite cavité inférieure fermée pour former ladite paroi de fond scellée.

2. Procédé selon la revendication 1, dans lequel ladite déformation plastique est mise en oeuvre par application d'un vide sur la surface externe dudit disque thermoplastique (15).

3. Procédé selon la revendication 2, dans lequel, lorsque ledit vide est appliqué, la déformation plastique est également mise en oeuvre par application d'une pression hydraulique à travers ledit col ouvert (7) aux confins de ladite partie paroi tubulaire et de ladite autre extrémité fermée.

4. Procédé selon la revendication 1, dans lequel ladite déformation plastique est mise en oeuvre par application d'une pression hydraulique à travers ledit col ouvert aux confins de ladite partie paroi tubulaire et de ladite autre extrémité fermée.

5. Procédé selon l'une quelconque des revendications précédentes, dans lequel la cavité inférieure fermée (27) dudit manchon de moulage utilisé dans le procédé est de forme concave (35) et une paroi de fond ayant une forme convexe est formée sur ledit récipient.

6. Procédé selon l'une quelconque des revendications précédentes, dans lequel ladite cavité inférieure fermée (27) dudit manchon de moulage (23) utilisée dans le procédé a une rainure circulaire (77) sur la périphérie de sa surface interne et dans lequel l'extrémité inférieure de ladite partie paroi tubulaire et l'arête périphérique dudit disque sont situées de façon adjacente au-dessus de ladite rainure, une paroi de fond présentant circonférentiellement un rebord support épaissi, s'étendant vers le bas, étant formée sur ledit récipient.

7. Procédé selon l'une quelconque des revendications précédentes, dans lequel ladite partie paroi tubulaire formée présente une pluralité de rainures longitudinales espacées sur sa circonférence.

8. Procédé selon l'une quelconque des revendications précédentes, dans lequel ladite partie paroi tubulaire est en un stratifié comportant une pluralité de couches de matière (97-101) et dans lequel ledit disque thermoplastique comprend également un stratifié comportant une pluralité de couches de matière.

9. Procédé selon la revendication 8, dans lequel au moins une (91-100) desdites couches est une couche formant barrière.

10. Procédé selon la revendication 9, dans lequel ladite couche formant barrière (91-101) comprend une matière imperméable à l'oxygène.
